# EUROPÄISCHE PATENTSCHRIFT

(11) **EP 1 720 269 B1**
(45) Veröffentlichungstag und Bekanntmachung des Hinweises auf die Patenterteilung: **16.12.2009**
(21) Anmeldenummer: 06008054.6
(22) Anmeldetag: 19.04.2006
(51) Int. Cl.: H04B 7/26, H04L 12/56, H04L 12/28

(54) **Verfahren zur Konfiguration von TDMA-Datenübertragungsblöcken bei einem TDMA-Kommunikationssystem mit mehreren Knoten und einer Basisstation**
Method for the configuration of TDMA data transfer blocks in a TDMA communication system with several nodes and a base station
Méthode pour la configuration des blocs de transfert de données AMRT dans un système de communication AMRT avec plusieurs noeuds et une station de base

(30) Priorität: 04.05.2005 DE 102005020732
(43) Veröffentlichungstag der Anmeldung: 08.11.2006
(73) Patentinhaber: ABB AG, 68309 Mannheim (DE)
(72) Erfinder: Steigmann, Richard, Dipl.-Ing., 67229 Gerolsheim (DE); Vefling, Harald, 3140 Borgheim (NO); Endresen, Jan, 1341 Slependen (NO); Vallestad, Anne E., 1338 Sandvika (NO)

(56) Entgegenhaltungen:
- EP-A- 1 296 532
- WO-A-02/063806
- WO-A-03/015452

## Beschreibung

Die Erfindung bezieht sich auf ein Verfahren zur Konfiguration von TDMA-Datenübertragungsblöcken (Time Division Multiple Access) bei einem TDMA-Kommunikationssystem mit mehreren Knoten und einer Basisstation.

Die Erfindung kann beispielsweise bei einem Kommunikationssystem mit einer Vielzahl drahtloser Sensoren und/oder Aktoren (Knoten) und einer Basisstation verwendet werden, welches in einer Maschine oder Anlage, beispielsweise Industrieroboter, Herstellungsautomat oder Fertigungsautomat installiert ist. Als Sensoren bzw. Aktoren können Näherungsschalter/Näherungssensoren, Temperaturmesssensoren, Druckmesssensoren, Strommesssensoren oder Spannungsmesssensoren bzw. mikromechanische, piezoelektrische, elektrochemische, magnetostriktive, elektrostatische oder elektromagnetische Aktoren verwendet werden.

In der DE 199 26 799 A1 wird ein System für eine eine Vielzahl von drahtlosen Näherungssensoren aufweisende Maschine, insbesondere Fertigungsautomat, vorgeschlagen, wobei
- jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Näherungssensoren mit elektrischer Energie vorgesehen ist,
- und wobei jeder Näherungssensor mit einer Sendeeinrichtung ausgestattet ist, welche interessierende Sensor-Informationen beinhaltende Funksignale an eine zentrale, mit einem Prozessrechner der Maschine verbundene Basisstation abgibt.

Bei diesem drahtlosen System entfällt im Vergleich zu konventionellen Lösungen mit Draht/Kabelanschluss zur elektrischen Energieversorgung und zur Kommunikation der durch Planung, Material, Installation, Dokumentation und Wartung bedingte relativ hohe Kostenfaktor der Draht/Kabelanschlüsse. Es können keine Ausfälle aufgrund von Kabelbrüchen oder schlechten, beispielsweise korrodierten Kontakten auftreten.

In der DE 199 26 562 A1 werden ein Verfahren und eine Anordnung zur drahtlosen Versorgung einer Vielzahl Aktoren mit elektrischer Energie, ein Aktor und eine Primärwicklung hierzu sowie ein System für eine eine Vielzahl von Aktoren aufweisende Maschine vorgeschlagen, wobei die vorgeschlagene Technologie bezüglich Energieversorgung und Kommunikation gleichartig der vorstehend für die DE 199 26 799 A1 angegebenen Technologie ist.

Für die Funkübertragung wird dabei vorzugsweise die TDMA-Technologie (Time Division Multiple Access) eingesetzt, bei der die Informationen von/zu den Aktoren bzw. Sensoren (Knoten) in Form zyklischer TDMA-Datenübertragungsblöcke übermittelt wird, wobei jedem Sensor/Aktor ein bestimmter Zeitschlitz innerhalb eines Datenübertragungsblockes zugeordnet ist.

Aus der DE 101 16 285 A1 ist ein Verfahren zum Betrieb eines Systems mit mehreren Knoten und einer Basisstation gemäß TDMA bekannt, wobei zyklische TDMA-Datenübertragungsblöcke übertragen werden und sich jeder TDMA-Datenübertragungsblock aus sukzessive nacheinander folgenden Zeitschlitzen zusammensetzt, wobei jeder Zeitschlitz einem bestimmten Knoten zugeordnet ist. Zu Beginn eines jeden Zeitschlitzes wird der beim vorausgegangenen TDMA-Datenübertragungsblock für diesen Zeitschlitz eingestellte Verstärkungswert im Empfänger der Basisstation als Voreinstellwert übernommen und voreingestellt.

Aus der DE 101 16 286 A1 ist ein Verfahren zum Betrieb eines Systems mit mehreren Knoten und einer Basisstation gemäß TDMA bekannt, wobei zyklische TDMA-Datenübertragungsblöcke übertragen werden und sich jeder TDMA-Datenübertragungsblock aus sukzessive nacheinander folgenden Zeitschlitzen zusammensetzt, wobei jeder Zeitschlitz einem bestimmten Knoten zugeordnet ist. Zu Beginn eines jeden Zeitschlitzes wird der beim vorausgegangenen TDMA-Datenübertragungsblock für diesen Zeitschlitz für die Signal-Detektion eingestellte frequenzabweichungsbedingte Gleichstromanteil oder die Phasendrehung im Empfänger der Basisstation als Voreinstellwert übernommen und voreingestellt.

Ein anderes Beispiel ist aus WO 03/015452 bekannt.

Der Erfindung liegt die Aufgabe zugrunde, ein Verfahren zur Konfiguration von TDMA-Datenübertragungsblöcken bei einem TDMA-Kommunikationssystem mit mehreren Knoten und einer Basisstation der eingangs genannten Art anzugeben, welches zu einem dynamischen Kommunikationssystem führt.

Diese Aufgabe wird weiterhin mit einem Verfahren gemäß Anspruch 1 gelöst.

Die mit der Erfindung erzielbaren Vorteile bestehen insbesondere darin, dass es nicht erforderlich ist, einen einmal festgelegten, mehr oder weniger starren TDMA-Datenübertragungsblock (Frame) für verschiedene Kommunikationssysteme mit unterschiedlicher Anzahl von Knoten zu verwenden. Die Frame-Länge ist stets exakt der Anzahl der Knoten des Kommunikationssystems angepasst. Die Ring-Umlaufzeit der Knoten wird verkürzt. Auf diese Weise werden Verzögerungen bei der Kommunikation verhindert, d. h. es ergeben sich Dynamik-Vorteile. Bei einer späteren Veränderung des Kommunikationssystems, d. h. Hinzufügen neuer Knoten oder Weglassen von bislang vorhandenen Knoten, kann sich die erforderliche Frame-Länge adaptiv dem veränderten Kommunikationssystem anpassen. Der Benutzer muss im Zusammenhang mit dieser System-Adaption nicht tätig werden, da das Kommunikationssystem die Adaption nach Initiierung selbsttätig vornehmen kann.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: ein Kommunikationssystem mit einer Vielzahl von drahtlos mit einer Basisstation kommunizierenden Knoten,
- Fig. 2: einen zyklischen TDMA-Datenübertragungsblock,
- Fig. 3: eine Folge von sukzessive aufeinander folgenden Datenübertragungsblöcken.

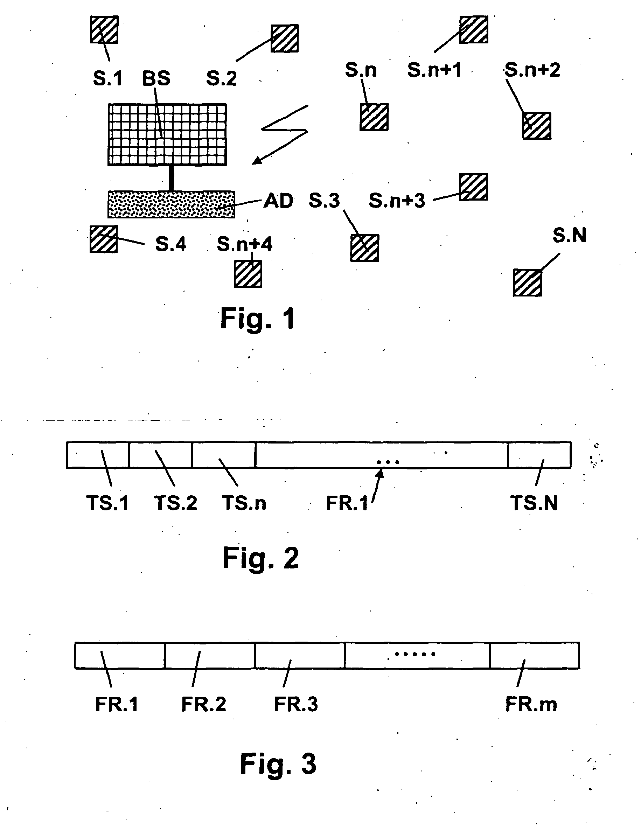

In Fig. 1 ist ein Kommunikationssystem mit einer Vielzahl von drahtlos mit einer Basisstation BS kommunizierenden Knoten, vorzugsweise Sensoren und/oder Aktoren, dargestellt. Es ist eine Vielzahl von Knoten S.1, S.2, S.3, S.4...S.n, S.n+1, S.n+2, S.n+3, S.n+4...S.N vorgesehen, welche beispielsweise innerhalb einer Anlage installiert oder an einer Maschine, insbesondere einem Fertigungsautomat befestigt sind, wobei
n = Laufindex eines bestimmten Knotens und
N = (gesamte) Anzahl der Knoten.

Bei Ausbildung eines Knotens als Sensor weist dieser einen die Sensorumgebung detektierenden Sensorkopf mit nachgeschalteter Signalauswertung auf. Bei Ausbildung eines Knotens als Aktor weist dieser eine Aktoreinheit (beispielsweise ein Druckluftventil oder ein Schütz) sowie eine Ansteuereinheit hierfür auf.

Die Knoten weisen jeweils eine Kommunikationseinrichtung auf, welche den erforderlichen Funksender und Funkempfänger enthält, um derart eine drahtlose Kommunikation zwischen der Basisstation BS und den Knoten (und umgekehrt) zu ermöglichen. Bei einem Sensor gelangt das aufbereitete Sensorsignal zu einem Modulator / Codierer mit nachgeschaltetem Funksender und Antenne, wo es an die Basisstation BS gesendet wird. Bei einem Aktor gelangt das von einer Basisstation BS gesendete Ansteuersignal über eine Antenne, einen Funkempfänger und einen Demodulator / Decodierer zur Ansteuereinheit.

Die Basisstation BS ist zweckmäßig an ein Automatisierungsgerät AD (Speicherprogrammierbare Steuerung) angeschlossen und weist eine Kommunikationseinrichtung auf, welche Sensorsignale der Sensoren und Meldesignale betreffend den aktuellen Zustand von Aktoren (uplink, von den Knoten zur Basisstation) empfängt, Ansteuersignale zur Aktivierung / Deaktivierung der Aktoren abgibt und Signale zur Einstellung von spezifischen Parametern der Aktoren und Sensoren abgibt (downlink, von der Basisstation zu den Knoten). Die. Kommunikationseinrichtung der Basisstation BS weist eine Antenne auf, an welche ein Funkempfänger und ein Funksender angeschlossen sind. Die Signale des Funkempfängers werden einem Demodulator / Decodierer zugeführt und dem Funksender ist ein Modulator / Codierer vorgeschaltet.

In Fig. 2 ist ein zyklischer TDMA-Datenübertragungsblock dargestellt, wie er beim vorgeschlagenen System verwendet wird. Ein derartiger Datenübertragungsblock oder Rahmen FR.1 setzt sich aus N sukzessive nacheinanderfolgenden Zeitschlitzen TS.1, TS.2.....TS.n.....TS.N zusammen, wobei
n = Laufindex eines bestimmten Zeitschlitzes und
N = (gesamte) Anzahl der Zeitschlitze eines Rahmens.

Jedem Knoten ist also ein bestimmter Zeitschlitz zugeordnet. Der Empfänger des Basisstation BS kann aus der jedem Zeitschlitz zugeordneten Nummer unverwechselbar den jeweiligen Funksender, d. h. den relevanten Knoten bestimmen. Obwohl beispielsweise die Sensoren ihre Nachrichten in zufälligen Augenblicken generieren, erfolgt eine an den zugeordneten Zeitschlitz bzw. die zugeordneten Zeitschlitze angepasste Übertragung. Um sicherzustellen, dass die in einem Zeitschlitz enthaltene Information auch dem richtigen Aktor zugeordnet wird, bzw. um sicherzustellen, dass ein Sensor die der Basisstation zu übermittelnde Information während des richtigen Zeitschlitzes absendet, enthält jeder Zeitschlitz ein typisches Synchronisationswort zur exakten Synchronisierung zwischen Basisstation BS einerseits und Knoten S.1...S.N andererseits.

In Fig. 3 ist eine Folge von sukzessive aufeinanderfolgenden TDMA-Datenübertragungsblöcken FR.1, FR.2, FR.3.....FR.m bzw. Rahmen dargestellt, wie dies zur Realisierung einer kontinuierlichen Signalübertragung erforderlich ist, wobei m der Laufindex eines bestimmten Datenübertragungsblocks ist.

Bei der Konfiguration des Kommunikationssystems
- ermittelt die Basisstation BS in einem ersten Schritt die Anzahl N der Knoten S.1...S.N,
- bildet die Basisstation in einem zweiten Schritt TDMA-Datenübertragungsblöcke, bei welchen die Anzahl N der Zeitschlitze gleich ist der ermittelten Anzahl N der Knoten S.1...S.N,
- teilt die Basisstation BS in einem dritten Schritt allen Knoten S.1 ...S.N die gültigen Kommunikationsbedingungen mit, d. h. welchem Zeitschlitz TS.n innerhalb der TDMA-Datenübertragungsblöcke welchem Knoten S.n zugeordnet ist.

Die Ermittlung der Anzahl der Knoten erfolgt z. B., indem die Basisstation BS Anforderungssignale abgibt, welche die Knoten S.1...S.N veranlassen, Meldesignale unter Angabe der relevanten Adress-Information an die Basisstation BS abzugeben. An Hand der unterschiedlichen Adress-Informationen ermittelt die Basisstation die Anzahl N der Knoten.

Die Ermittlung der Anzahl der Knoten erfolgt alternativ hierzu, indem das System zunächst in einem TDMA-Verfahren mit fest vorgegebener Anzahl an Zeitschlitzen (fixe Slotstruktur) startet, wobei die Anzahl der Zeitschlitze größer als die Anzahl der Knoten ist. Aufgrund der eingegangenen Antwortsignale der Knoten an die Basisstation kennt die Basisstation nunmehr die tatsächliche Anzahl der Knoten und sendet den Knoten über einen geeigneten Kanal die neuen Kommunikationsinformationen (zugeordneter Zeitschlitz,.....).

Bei einer späteren Veränderung des Kommunikationssystems, sei es durch Hinzufügen neuer Knoten oder sei es durch Weglassen von bislang vorhandenen Knoten kann eine Konfiguration erneut initiiert werden, so dass eine System-Adaption mit Anpassung der Frame-Länge und somit eine System-Optimierung erfolgen kann.

Bei einem Kommunikationssystem ist es selbstverständlich möglich, dass die einzelnen Knoten S.1...S.N Nachrichten (Payload) unterschiedlich langer Symbolfolge absenden / empfangen müssen. Dementsprechend können die Zeitschlitze TS.1...TS.N mit den Erfordernissen angepasster unterschiedlicher zeitlicher Länge ausgebildet sein, z. B. in Form eines einem einzelnen Knoten zugeordneten Doppel-Zeitschlitzes. Diese speziellen Prämissen werden dem Konfigurations-Verfahren als Randbedingungen vorgegeben.

### Bezugszeichenliste:

- AD: Automatisierungsgerät
- BS: Basisstation
- FR.1, FR.2, FR.m: TDMA-Datenübertragungsblöcke
- m: Laufindex eines TDMA-Datenübertragungsblocks
- n: Laufindex eines Zeitschlitzes = Laufindex eines Knotens
- N: Anzahl der Zeitschlitze = Anzahl der Knoten
- S.1, S.2, S.n, S.N: Knoten (Sensoren, Aktoren)
- TS.1, TS.2, TS.n, TS.N: Zeitschlitze eines TDMA-Datenübertragungsblocks

## Patentansprüche

1. Verfahren zur Konfiguration von TDMA-Datenübertragungsblöcken bei einem TDMA-Kommunikationssystem mit mehreren Knoten (S.1...S.N) und einer Basisstation (BS),
- wobei die Basisstation (BS) in einem ersten Schritt die Anzahl der Knoten (S.1...S.N) ermittelt,
- wobei die Basisstation (BS) in einem zweiten Schritt TDMA-Datenübertragungsblöcke (FR.1... FR.m) bildet, bei welchen die Anzahl (N) der Zeitschlitze gleich ist der ermittelten Anzahl (N) der Knoten
- und wobei die Basisstation (BS) in einem dritten Schritt jedem Knoten (S.1...S.N) mitteilt, welcher Zeitschlitz (TS.1...TS.N) ihm innerhalb der gebildeten TDMA-Datenübertragungsblöcke zugeordnet ist,
**dadurch gekennzeichnet, dass**
- dass die Ermittlung der Anzahl der Knoten erfolgt, indem das System zunächst in einem TDMA-Verfahren mit fest vorgegebener Anzahl an Zeitschlitzen startet - wobei die Anzahl der Zeitschlitze größer als die Anzahl der Knoten ist - und die Basisstation (BS) aufgrund der eingegangenen Antwortsignale der Knoten (S.1...S.N) nunmehr die tatsächliche Anzahl (N) der Knoten kennt,
- so dass die Frame-Länge stets exakt der Anzahl der Knoten des Kommunikationssystems angepasst ist.

2. Verfahren nach Anspruch 1, **dadurch gekennzeichnet, dass** die Zeitschlitze (TS.1 ...TS.N) mit den Erfordernissen angepasster unterschiedlicher zeitlicher Länge ausgebildet sind, z. B. in Form eines einem einzelnen Knoten zugeordneten Doppel-Zeitschlitzes.

## Claims

1. A method for the configuration of TDMA data transfer blocks in a TDMA communication system with several nodes (S.1 .... S.N) and a base station (BS),
- with the base station (BS) determining the number of nodes (S.1 .... S.N) in a first step;
- with the base station (BS) forming TDMA data transfer blocks (FR.1 .... FR.m) in a second step, in which the number (N) of the time slots is equal to the determined number (N) of the nodes;
- and with the base station (BS) informing each node (S.1 .... S.N) in a third step which time slot (TS.1 .... TS.N) is allocated to the same within the formed TDMA data transfer blocks,
**characterized in that**
- the determination of the number of nodes occurs **in that** the system starts at first in a TDMA process with a fixedly predetermined number of time slots, with the number of time slots being larger than the number of nodes, and the base station (BS) now knows the actual number (N) of the nodes on the basis of the received answer signals of the nodes (S.1 .... S.N) ,
- so that the frame length is always adjusted precisely to the number of nodes of the communication system.

2. A method according to claim 1, **characterized in that** the time slots (TS.1 .... TS.N) are arranged with the requirements of adjusted different time length, e.g. in the form of a double time slot associated with a single node.

## Revendications

1. Procédé pour la configuration de blocs de transmission de données TDMA dans un système de communications TDMA avec plusieurs noeuds (S.1...S.N) et une station de base (BS),
- dans lequel la station de base (BS) détermine dans une première étape le nombre de noeuds (S.1... S.N),
- dans lequel la station de base (BS) constitue dans une deuxième étape des blocs de transmission de données TDMA (FR.1...FR.m) dans lesquels le nombre (N) de créneaux de temps est égal au nombre déterminé (N) de noeuds,
- et dans lequel la station de base (BS) communique dans une troisième étape à chaque noeud (S.1...S.N) quel créneau de temps (TS.1...TS.N) lui est attribué dans les blocs de transmission de données TDMA,
**caractérisé en ce que**
- le nombre de noeuds est déterminé par le fait que le système démarre tout d'abord en procédé TDMA avec un nombre fixe prédéterminé de créneaux de temps, le nombre de créneaux de temps étant plus grand que le nombre de noeuds, et la station de base (BS) connaît ensuite, grâce aux signaux de réponse reçus des noeuds (S.1...S.N), le nombre réel (N) de noeuds,
- de sorte que la longueur des trames est toujours adaptée précisément au nombre de noeuds du système de communication.

2. Procédé selon la revendication 1, **caractérisé en ce que** les créneaux de temps (TS.1...TS.N) sont formés avec une longueur dans le temps différente en fonction des besoins, par exemple sous la forme d'un double créneau de temps attribué à un seul noeud.
